# EUROPEAN PATENT SPECIFICATION

(11) **EP 3 004 028 B1**
(45) Date of publication and mention of the grant of the patent: **05.04.2017**
(21) Application number: 14738917.5
(22) Date of filing: 22.05.2014
(51) Int. Cl.: C04B 41/65

(54) **METHOD FOR REINFORCING POROUS CONSTRUCTION MATERIALS AND USE OF CALCIUM ACETOACETATE SOLUTION TO THIS AIM**
VERFAHREN ZUR VERSTÄRKUNG PORÖSER BAUSTOFFE UND VERWENDUNG EINER CALCIUM-ACETOACETAT-LÖSUNG DAFÜR
PROCÉDÉ DE RENFORCEMENT DE MATÉRIAUX DE CONSTRUCTION POREUX ET UTILISATION D'UNE SOLUTION D'ACÉTOACÉTATE DE CALCIUM À CET EFFET

(30) Priority: 28.05.2013 SI 201300132; 20.05.2014 SI 201400186
(43) Date of publication of application: 13.04.2016
(73) Proprietor: Zavod za Gradbenistvo Slovenije, 1000 Ljubljana (SI); Saning International D.o.o. Kranj, 4000 Kranj (SI)
(72) Inventor: SKRLEP, Luka, 1234 Menges (SI); PONDELAK, Andreja, 3211 Skofja vas (SI); SEVER SKAPIN, Andrijana, 1358 Log pri Brezovici (SI)
(74) Representative: Borstar, Dusan
(86) International application number: PCT/SI2014/000028
(87) International publication number: WO 2014/193313

(56) References cited:
- P. A. SHAFFER: "ANTIKETOGENESIS: I. AN IN VITRO ANALOGY", JOURNAL OF BIOLOGICAL CHEMISTRY, vol. 47, 1921, pages 433-448, XP002731956,
- FAVARO M ET AL: "A novel approach to consolidation of historical limestone: the calcium alkoxides", APPLIED ORGANOMETALLIC CHEMISTRY, HARLOW, GB, vol. 22, no. 12, 1 December 2008 (2008-12-01), pages 698-704, XP002579038, ISSN: 0268-2605, DOI: 10.1002/AOC.1462 [retrieved on 2008-10-10] cited in the application

## Description

The present invention belongs to chemistry, namely to use of organic or inorganic compounds for the purposes of acting to mortar, concrete or artificial stone. In the field of chemistry, the invention also belongs to subsequent treatment of mortar, concrete or artificial stone.

The purpose of the invention is to reinforce a porous mineral construction material, namely to improve physical and mechanical properties thereof, by which without negative secondary effects to the construction material as such or also to the environment each desired reinforcing could be assured also in the depth of each material and not only on the surface or just below the surface thereof.

The expression »mineral construction material« in this application means an essentially inorganic construction material, in particular on the basis of mortar, lime, stone, clay and similar, which optionally includes metallic particles, like e.g. armor, and/or organic additives, wherein said expression also includes surface coatings, which arc suitable for application onto previously mentioned materials.

Impregnating of porous materials with difficultly soluble or not soluble substances is usually performed by introduction of a soluble or volatile precursor, which due to chemical transformation forms a difficultly soluble or not soluble substance within the pores of a porous material. However, soluble or volatile precursors which could form calcium carbonate are quite rare.

Methods for impregnating porous materials with metallic hydroxides are known, in which the final products are carbonates. Impregnating of paper is generally feasible by using water solutions of magnesium hydroxide, calcium hydroxide or barium hydroxide. The main deficiency is high degree of alkalization, which leads to depolymerisation of paper.

The use of solutions of calcium alkoxides for stone consolidation is proposed by M. Favaro et al, Appl. Oranometal. Chem 22, 698 (2008).

The use of a solution of calcium acetoacetate in antiketogenesis is proposed by P. A. Schaffer, J. Biol. Chem. 47, 433 (1921), however in combination with glucose and NaOH.

In order to avoid such problems, the so-called "Wei T'o" method proposes use of solution magnesium methoxy methyl carbonate in methanol or in ethanol or in CFC. The main deficiency is use of CFC.

A further method is known to persons skilled in the art as "*Bookkeeper*", in which a dispersion of magnesium oxide particles with size below 1 µm are used. Impregnating by means of said particles is however possible up to a limited depth. Magnesium oxide reacts with water, and the result is hydroxide, which then with carbon dioxide leads to carbonate.

By reinforcing of classical frescoes and porous minerals nano particles of calcium hydroxide were also used (»Properties and Applications to Restoration of Frescoes, Colloidal Particles of Ca(OH)2«: M. Ambrosi, L. Dei, R. Giorgi, C. Nero, P. Baglioni; Langmuir 2001, 17, 4251-4255). However, relatively small depth of reinforcing can be achieved by using said calcium hydroxide nano particles, namely only several millimeters (»The nanolimes in Cultural Heritage conservation: Characterisation and analysis of the carbonalation process«; V. Danie/e, G. Taglieri, R. Quaresima; Journal of Cultural Heritage 2008, 9, 294-301).

Impregnation is performed also by using solutions of calcium alkoxides (»A novel approach to consolidation of historical limestone: the calcium alkoxides«; M. Favaro, P. Tomasin, F. Ossola. P. A. Yigato; Applied Organometallic Chemistry 2008, 22, 698-704), but the main deficiencies of such method are limited solubility, high alkalinity and sensibility in respect of moisture during the application.

The solution of the previously mentioned problem is based on idea that a solution of calcium acetoacetate Ca(OOCCH₂COCH₃)₂ is delivered into pores of the construction material, which is then transformed to calcium carbonate, by which said pores in the construction material are then gradually filled, which contributes to reinforcing thereof, wherein the water is obtained either from the solution as such, or when a volatile solvent like e.g. alcohol is used, molecules of water are obtained from the moisture in the air, as soon as the solvent is vaporized. Due to such approach, the substance used for producing calcium carbonate can be easily transported deep into each construction material in order to fill pores, which are located essentially deeper below the surface than in other cases known in the state of the art.

Disintegration of the ion of acetoacetate is usually the first-level decay. The half-life of the ion of acetoacetate at temperature 5°C is usually approximately one year, at 25°C around 23 days, and at 45°C around 2 days. Disintegration of the acetoacetic acid is approximately 50-times shorter ("Kinetics of decarboxilation of acetoacetic acid"; Hay, R. W.; Bond, M. A. (1967): Aust. J. Chem. 20 (9); 1823-8).

In the presence of moisture, said ion of acetoacetate disintegrates in accordance: with the following formula:

2 CH₃COCH₂COO⁻ + H₂O → CO₃²⁻ + CO₂ + 2 CH₃COCH₃

A by-product of such reaction is acetone, which is extremely volatile, but releasing thereof in the atmosphere extends gradually during a long time period, so that emissions of the acetone can be practically neglected.

Synthesis of the calcium acetoacetate as such can be performed in various manners. If can be obtained by means of acetoacetic acid with calcium hydroxide, calcium oxide, calcium carbonate or certain calcium salts by substitution of a cation.

Solutions of calcium acetoacetate are produced either by dilution of calcium carbonate, or formation of calcium acetoacetate within a solvent. Concentration of calcium acetoacetate is adjusted from supersaturated or saturated or essentially unsaturated. Calcium carbonate CaCO₃ is obtained from calcium acetoacetate in accordance with the following chemical equation:

Ca(OOCCH₂COCH₃)₂ + H₂O → CaCO₃ + CO₂ + 2 CH₃COCH₃

The by-product of such reaction is acetone, which is extremely volatile, but releasing thereof in the atmosphere extends gradually during a long time period, so that emissions of the acetone can be practically neglected.

The rate of formation of calcium carbonate depends on temperature, pH, solvents and presence of various catalysts. The presence of primarily amines essentially increases (catalyses) the rate of disintegration of the acetoacetate ion (»Carbon Dioxide Cleavage from Acetone Dicarboxylic Acid«; E. O. Wiig; J. Phys. Chem., 1928, 32 (7), 961-981), and in particular suitable amines are aniline, aminacetonitrile and phenylhydrazine.

The invention provides a method for reinforcing porous mineral construction materials, wherein in the first step a solution of calcium acetoacetate Ca(OOCCH₂COCH₃)₂ is prepared in a solvent, upon which such obtained solution is applied onto the surface of said construction material in order to assure penetration of said solution towards the interior of said construction material, namely into pores therein, so that within said pores thanks to reaction (I)

Ca(OOCCH₂COCH₃)₂ + H₂O → CaCO₃ + CO₂ + 2 CH₃COCH₃ (I)

calcium carbonate CaCO₃ is formed, upon which said application of said calcium acetoacetate Ca(OOCCH₂COCH₃)₂ solution onto the surface of the construction material is optionally at least once repeated.

The solvent is either water or alcohol, namely methanol or ethanol or a mixture of methanol and ethanol. The porous mineral construction material is selected from the group, which includes stone, artificial stone, concrete, mortar, clay bricks, lime render or a surface layer of a porous coating, in particular color painting.

In accordance with the invention, a solution of calcium acetoacetate Ca(OOCCH₂COCH₃)₂ is used for at least a single application onto the surface of said porous construction material and penetration into pores in said construction material, so that calcium carbonate CaCO₃ is formed on the basis of the following chemical reaction (I)

Ca(OOCCH₂COCH₃)₂ + H₂O → CaCO₃ + CO₂ + 2 CH₃COCH₃ (I)

within said pores in said construction material.

Again, the solvent is either water or alcohol, namely methanol or ethanol or a mixture of methanol and ethanol, the porous mineral construction material is selected from the group, which includes stone, artificial stone, concrete, mortar, clay bricks, lime render or a surface layer of a porous coating, in particular color painting.

Impregnating of porous materials with the previously mentioned solution can be performed at increased pressure or at atmospheric pressure or also by means of vacuum impregnation Calcium acetoacetate in said solution easily penetrates into porous materials, and upon transformation i.e. reaction with water forms calcium carbonate. Impregnating can be performed several times. Consequently, said porous material becomes reinforced. Acetoacetic acid used in synthesis of calcium acetate as such can be also obtained by using acetoacetates (salts) by means of hydrolysis of di-ketene or 2,2,6-trimethil-1,3-dioxane-4-one.

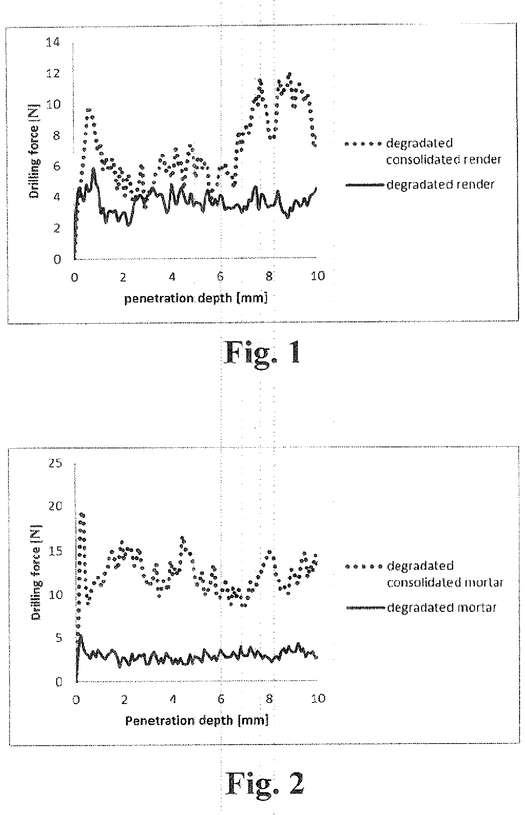

Practical efficiency of reinforcing porous mineral construction materials by using calcium acetate Ca(OOCCH₂COCH₃)₂ for preparing a solution in a solvent and at least one application of such solution onto the surface of said porous construction material followed by penetration into said pores of the construction material are graphically presented in Figs. 1 - 4, wherein
Fig. 1 presents a diagram, by which the efficiency of reinforcement is presented by means of forces which were measured by drilling with constant progression towards the depth according to DRMS method, which has been on the one hand performed on a degraded and not reinforced render, and on the other hand on a degraded and reinforced render;
Fig. 2 presents a diagram, by which the efficiency of reinforcement is presented by means of forces which were measured by drilling with constant progression towards the depth according to DRMS method, which has been on the one hand performed on a degraded and not reinforced mortar, and on the other hand on a degraded and reinforced mortar;

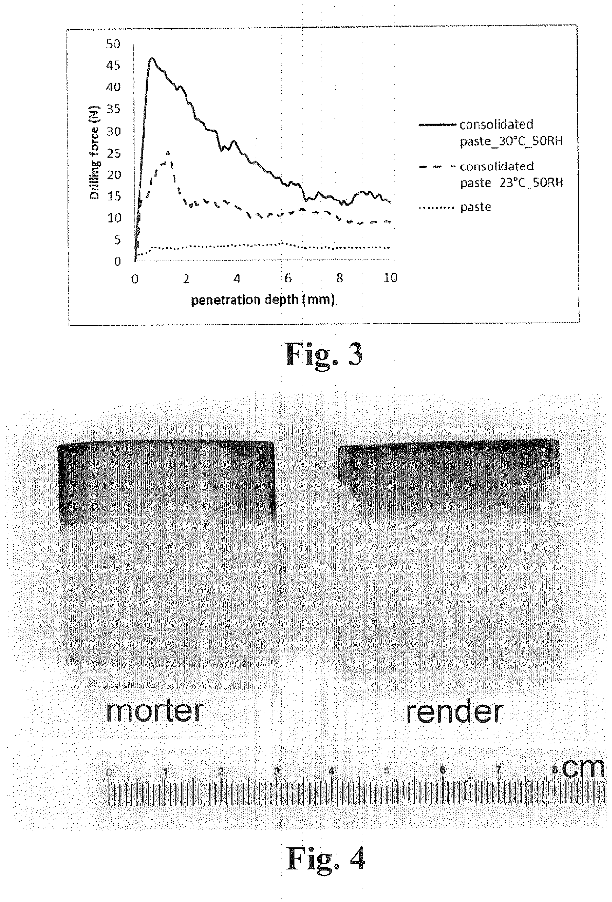

Fig. 3 presents a diagram, by which the efficiency of reinforcement is presented by means of forces which were measured by drilling with constant progression towards the depth according to DRMS method, which has been on the one hand performed on a not reinforced lime paste, and on the other hand on the reinforced lime paste as described in Example 6;
Fig. 4 is a visual presentation of penetration of the solution into mortar and render.

The previously mentioned method DRMS is based on measuring of forces by drilling into each construction material, depending on the depth of drilling by constant progression rate (40 mm/min) and constant rotation speed (200 revolutions/min) by means of a drill, the diameter of which is 5 mm (DRMS profile 3).

### Example 1

When performing a synthesis of an aqueous solution of calcium acetoacetate, 52 g (1,3 mol) of NaOH needs to be diluted in 150 g of water. The obtained solution is then cooled to 0°C. During intensively mixing and cooling 116 g (1 mol) of cooled (0°C) methylacetoacetate is gradually admixed. The obtained solution is after 72 hours at the room temperature extracted with ether 3 x 10 ml and then cooled to - 10°C. Upon that, 66,4 g of H₂SO₄ (96%) is added during mixing to 300 g diethyl ether cooled to -10°C. Then 40 g of non aqueous Na₂SO₄ is added, which is then followed by filtration of Na₂SO₄·10 H₂O and of excessive Na₂SO₄. Vapor of diethyl ether is then removed in vacuum. The obtained acetoacetic acid is diluted in 200 g of water, and gradually added to a suspension of 37 g (0,5 mol) of Ca(OH)₂ in 1000 g of water. Precipitates and filtrates are then removed by means of filtration, upon which the solution of calcium acetoacetate is stored at temperature at least approximately 0°C up to the application thereof. Approximately 1200 g of aqueous solution of calcium acetoacetate in concentration of 7,3 % were gained by means of the previously described method prior to application thereof onto surface of a construction material and then into pores within said material.

### Example 2

In order to perform a synthesis of water solution of calcium acetoacetate Ca(OOCCH₂COCH₃)₂, 20 g (0,2 mol) of CaCO₃ and 100 g of water are fed into a flask, which is then followed by mixing by means of a magnetic mixing tool in duration of approximately 10 min. Upon that, 81,3 g (0,42 mol) of acetone dicarboxylic acid is gradually admixed in small quantities. The flask is then immersed into water of temperature 40°C. Upon that, 330 g of water is added, by which 460 g of water solution of calcium acetoacetate is obtained in concentration of 9,6%, which is suitable for application onto surface of a construction material and penetration into pores therein.

### Example 3

Efficiency of reinforcement has been verified on the basis of species consisting of degraded lime mortar, which were then reinforced with the water solution of Calcium acetoacetate Cₐ(OOCCH₂COCH₃)₂. Degraded lime mortar was prepared of calcite sand having granulation > 1 mm (360 g), pulverized calcite (120 g), carbonized lime (160 g), lime (40 g) and water (180 g). Prismatic molds with dimensions 6 x 1 x 1 cm were then filled with the mortar. Upon drying, such produced prisms were carbonized in the atmosphere 1% CO₂ up to the constant weight. Upon that, said prisms were once or twice, delayed for 24 hours, reinforced with the water solution (concentration 9,6 %) of calcium acetoacetate, wherein the quantity of said solution was 0,5 ml to 1,0 ml of mortar. Comparative prisms were also prepared of calcite sand with granulation > 1 mm (180 g), pulverized calcite (60 g), lime (80 g) and water (80 g), witch were then carbonized in the atmosphere 1% CO₂ up to the constant weight. Efficiency of reinforcement is presented on the basis of bending fatigue of the mortar impregnated with various quantities of said solution as the reinforcing means, the values thereof are given in the Table 1 below.

**Table 1**

| Prisms of mortar | Quantity of the reinforcing means (g/ml of substrate) | Bending fatigue (MPa) |
|---|---|---|
| Non-degraded mortar | 0 | 1,38 |
| Degraded mortar | 0 | 0,57 |
| Mortar impregnated with different quantities of reinforcing means (aged for 25 days at 40°C and relative moisture 98%) | 0,125 | 1,18 |
| | 0,250 | 1,64 |
| | 0,375 | 1,87 |
| | 0,50 | 2,35 |
| | 0,750 | 2,91 |

### Example 4

Water solution of calcium acetoacetate in concentration of 4,8% was used for reinforcing i.e. impregnation of render with a color painting, namely of a frescoe. In such manner the frescoe structure i.e. the color painting was reinforced without exposing any whitening eflect.

### Example 5

Upon application of water solution of calcium acetoacetate onto the surface of a porous mineral construction material, the depth of penetration of said solution into construction material has been investigated. In order to determine the depth, water solution of sodium nitroprusside was applied onto a cross-section of the specimen. In practice, red/blue color shades show the depth of penetration of the solution i.e. the reinforcing means into the construction material. Such determined values of depth of penetration into mortar and render are given in Table 2 below.

**Table 2**

| Substrate | Penetration depth (mm) |
|---|---|
| Mortar | 14 mm |
| Render | 15 mm |

### Example 6

In order to verify the efficiency of reinforcement, model pastes of degraded lime mortar were prepared, which were then treated with water solution of calcium acetoacetate Ca(OOCCH₂COCH₃)₂. Such degraded lime paste was prepared of carbonized lime (1080 g), lime (120 g) and water (900 g). Circular molds with diameter 5,5 mm were then filled with the pasta. After drying, the obtained cylinders were carbonized up to constant weight in the atmosphere containing 1% CO₂. Then the cylinders were two times with the interruption of 24 hours treated with the water solution of calcium acetoacetate (concentration 21,4%), wherein a dry weight of calcium acetoacetate relative to the dry weight of each cylinder was 15,4%. Upon that, the cylinders were aged for 8 days at temperatures +23 °C and +30°C and constant relative moisture 50%. Efficiency of reinforcement in the view of comparison between non-reinforced and reinforced pasta are presented in Fig. 3.

## Claims

1. Method for reinforcing porous mineral construction materials, wherein in the first step a solution of calcium acetoacetate Ca(OOCCH₂COCH₃)₂ is prepared in a solvent, upon which such obtained solution is applied onto the surface of said construction material in order to assure penetration of said solution towards the interior of said construction material, namely into pores therein, so that within said pores thanks to reaction (I)
Ca(OOCCH₂COCH₃)₂ + H₂O → CaCO₃ + CO₂ + 2 CH₃COCH₃ (I)
calcium carbonate CaCO₃ is formed, upon which said application of said Calcium acetoacetate Ca(OOCCH₂COCH₃)₂ solution onto the surface of the construction material is optionally at least once repeated.

2. Method according to Claim 1, **characterized in that** said solvent is water.

3. Method according to Claim 1, **characterized in that** said solvent is alcohol.

4. Method according to Claim 3, **characterized in that** said solvent is methanol.

5. Method according to Claim 3, **characterized in that** said solvent is ethanol.

6. Method according to Claim 3, **characterized in that** said solvent is a mixture of methanol and ethanol.

7. Method according to anyone of Claims 1 - 6. wherein said porous mineral construction material is selected from the group, which includes stone, artificial stone, concrete, mortar, clay bricks, lime render or a surface layer of a porous coating, in particular color painting

8. Use of a solution of calcium acetoacetate Ca(OOCCH₂COCH₃)₂ in a solvent for at least a single application onto the surface of a porous construction material and penetration into pores in said construction material, so that Calcium carbonate CₐCO₃ is formed on the basis of the following chemical reaction (1)
Ca(OOCCH₂COCH₃)₂ + H₂O → CaCO₃ + CO₂ + 2 CH₃COCH₃ (I)
within said pores in said construction material.

9. Use according to Claim 8, wherein said solvent is water.

10. Use according to Claim 8, wherein said solvent is alcohol.

11. Use according to Claim 10, wherein said solvent is methanol.

12. Use according to Claim 10, wherein said solvent is ethanol.

13. Use according to Claim 10, wherein said solvent is a mixture of methanol and ethanol.

14. Use according to anyone of Claims 8 - 13, wherein said porous mineral construction material is selected from the group, which includes stone, artificial stone, concrete, mortar, clay bricks, lime render or a surface layer of a porous coating, in particular color painting.

## Patentansprüche

1. Verfahren zur Verstärkung poröser mineralischer Baustoffe, wobei in einem ersten Schritt eine Lösung von Calciumacetoacetat C₂(OOCCH₂COCH₃)₂ in einem Lösungsmittel hergestellt wird, woraufhin die auf diese Weise erhaltene Lösung auf die Oberfläche des Baustoffs aufgebracht wird, um das Eindringen der Lösung ins Innere des Baustoffs sicherzustellen, nämlich in die darin befindlichen Poren, sodass sich in den Poren aufgrund der Reaktion (I)
Ca(OOCCH₂COCH₃)₂ + H₂O → CaCO₃ + CO₂+ 2 CH₃COCH₃ (I)
Calciumcarbonat CaCO₃ bildet, woraufhin das Aufbringen der Lösung von Calciumacetoacetat Ca(OOCCH₂COCH₃)₂ auf die Oberfläche des Baustoffs möglicherweise mindestens einmal wiederholt wird.

2. Verfahren nach Anspruch 1, **dadurch gekennzeichnet, dass** es sich bei dem Lösungsmittel um Wasser handelt.

3. Verfahren nach Anspruch 1, **dadurch gekennzeichnet, dass** es sich bei dem Lösungsmittel um Alkohol handelt.

4. Verfahren nach Anspruch 3, **dadurch gekennzeichnet, dass** es sich bei dem Lösungsmittel um Methanol handelt.

5. Verfahren nach Anspruch 3, **dadurch gekennzeichnet, dass** es sich bei dem Lösungsmittel um Ethanol handelt.

6. Verfahren nach Anspruch 3, **dadurch gekennzeichnet, dass** es sich bei dem Lösungsmittel um eine Mischung aus Methanol und Ethanol handelt.

7. Verfahren nach einem beliebigen der Ansprüche 1 bis 6, wobei der poröse mineralische Baustoff aus der Gruppe ausgewählt ist, die Stein, Kunststein, Beton, Mörtel, Tonziegel, Kalkputz oder eine Oberflächenschicht einer porösen Beschichtung, insbesondere einen Farbanstrich, umfasst.

8. Verwendung einer Lösung von Calciumacetoacetat Ca(OOCCH₂COCH₃)₂ in einem Lösungsmittel für ein mindestens einmaliges Aufbringen auf die Oberfläche eines porösen Baustoffs und ein Eindringen in die Poren des Baustoffs, sodass sich auf Grundlage der folgenden chemischen Reaktion (I)
Ca(OOCCH₂COCH₃)₂ + H₂O → CaCO₃ + CO₂⁺ 2 CH₃COCH₃ (I)
innerhalb der Poren des Baustoffs Calciumcarbonat CaCO₃ bildet.

9. Verwendung nach Anspruch 8, wobei es sich bei dem Lösungsmittel um Wasser handelt.

10. Verwendung nach Anspruch 8, wobei es sich bei dem Lösungsmittel um Alkohol handelt.

11. Verwendung nach Anspruch 10, wobei es sich bei dem Lösungsmittel um Methanol handelt.

12. Verwendung nach Anspruch 10, wobei es sich bei dem Lösungsmittel um Ethanol handelt.

13. Verwendung nach Anspruch 10, wobei es sich bei dem Lösungsmittel um eine Mischung aus Methanol und Ethanol handelt.

14. Verwendung nach einem beliebigen der Ansprüche 8 bis 13, wobei der poröse mineralische Baustoff aus der Gruppe ausgewählt ist, die Stein, Kunststein, Beton, Mörtel, Tonziegel, Kalkputz oder eine Oberflächenschicht einer porösen Beschichtung, insbesondere einen Farbanstrich, umfasst.

## Revendications

1. Procédé pour renforcer des matériaux de construction minéraux poreux, dans lequel, dans la première étape une solution d'acétoacétate de calcium Ca(OOCCH₂COCH₃)₂ est préparée dans un solvant, après quoi une telle solution obtenue est appliquée sur la surface dudit matériau de construction afin d'assurer la pénétration de ladite solution vers l'intérieur dudit matériau de construction, à savoir dans l'intérieur des pores, de sorte que, dans lesdits pores, grâce à la réaction (I)
Ca(OOCCH₂COCH₃)₂ + H₂O → CaCO₃ + CO₂ + 2 CH₃COCH₃ (I)
du carbonate de calcium CaCO₃ est formé, après quoi ladite application de ladite solution d'acétoacétate de calcium Ca(OOCCH₂COCH₃)₂ sur la surface du matériau de construction est éventuellement répétée au moins une fois.

2. Procédé selon la revendication 1, **caractérisé en ce que** ledit solvant est l'eau.

3. Procédé selon la revendication 1, **caractérisé en ce que** ledit solvant est un alcool.

4. Procédé selon la revendication 3, **caractérisé en ce que** ledit solvant est le méthanol.

5. Procédé selon la revendication 3, **caractérisé en ce que** ledit solvant est l'éthanol.

6. Procédé selon la revendication 3, **caractérisé en ce que** ledit solvant est un mélange de méthanol et d'éthanol.

7. Procédé selon l'une quelconque des revendications 1 à 6, dans lequel ledit matériau de construction minéral poreux est choisi dans le groupe qui comprend une pierre, une pierre artificielle, un béton, un mortier, des briques d'argile, un enduit à la chaux ou une couche superficielle d'un revêtement poreux, en particulier une peinture de couleur.

8. Utilisation d'une solution d'acétoacétate de calcium Ca(OOCCH₂COCH₃)₂ dans un solvant pour au moins une seule application sur la surface d'un matériau de construction poreux et la pénétration dans les pores dudit matériau de construction, de telle sorte que du carbonate de calcium CaCO₃ est formé sur la base de la réaction chimique (I) suivante Ca(OOCCH₂COCH₃)₂ + H₂O → CaCO₃ + CO₂ + 2 CH₃COCH₃ (I) à l'intérieur desdits pores dans ledit matériau de construction.

9. Utilisation selon la revendication 8, dans laquelle ledit solvant est l'eau.

10. Utilisation selon la revendication 8, dans laquelle ledit solvant est un alcool.

11. Utilisation selon la revendication 10, dans laquelle ledit solvant est le méthanol.

12. Utilisation selon la revendication 10, dans laquelle ledit solvant est l'éthanol.

13. Utilisation selon la revendication 10, dans laquelle ledit solvant est un mélange de méthanol et d'éthanol.

14. Utilisation selon l'une quelconque des revendications 8 à 13, dans laquelle ledit matériau de construction minéral poreux est choisi dans le groupe qui comprend une pierre, une pierre artificielle, un béton, un mortier, des briques d'argile, un enduit à la chaux ou une couche superficielle d'une revêtement poreux, en particulier une peinture de couleur.
